# EUROPEAN PATENT SPECIFICATION

(11) **EP 2 927 638 B1**
(45) Date of publication and mention of the grant of the patent: **29.03.2017**
(21) Application number: 14197062.4
(22) Date of filing: 09.12.2014
(51) Int. Cl.: G01C 21/00, G01C 21/20, G01S 19/42

(54) **Method and apparatus for positioning and navigating**
Verfahren und Vorrichtung zur Positionsbestimmung und Navigation
Procédé et appareil de positionnement et de navigation

(30) Priority: 31.03.2014 CN 201410126006
(43) Date of publication of application: 07.10.2015
(73) Proprietor: Xiaomi Inc., Beijing 100085 (CN)
(72) Inventor: Zhou, Peng, Haidian District (CN); Yuan, Yanbin, Haidian District (CN)
(74) Representative: Hanna, Peter William Derek

(56) References cited:
- EP-A1- 1 059 510
- US-A1- 2003 176 965
- US-A1- 2008 153 516
- US-A1- 2011 064 312

## Description

### TECHNICAL FIELD

The present disclosure relates to the field of map positioning, and more particularly, to a method and an apparatus for positioning and navigating.

### BACKGROUND

With the development of information technology, applications having map positioning functions to determine the geographic position where users are located, geographic positioning to determine positions to be reached, and navigating functions to obtain routes for reaching the destination have become increasingly popular.

In the related art, methods for positioning and navigating are provided, in which coordinates information of a user's current position is firstly obtained by positioning manners such as GPS (Global Positioning System), base station or Wi-Fi (Wireless Fidelity); then a destination input is received by the user, and coordinates information of the destination are obtained; and then a route for reaching the destination is determined based on the coordinates information of current position and the coordinates information of the destination. In a method for positioning and navigating, in order to solve the problem of the direction-sense of the users (e.g. users cannot distinguish the orientations of east, south, west and north in surrounding environment and, consequently, cannot reach the destination according to the provided route), orientation may be obtained by a gyro or by an electronic compass, and then notified to the user. In this way, the user may be guided to turn to the correct direction along the route, so as to reach the destination successfully.
US 2011/064312 A1 and EP 1,059,510 A1 are representative of the state of the background art.

### SUMMARY

In view of the above, the object of this present disclosure is to provide a method and an apparatus for positioning and navigating in accordance with the appended claims. Weight, volume and production cost of the electronic device are increased due to employing hardware such as gyro or electronic compass to obtain orientation to guide the users in the correct direction along the path; the embodiments of the present disclosure provide a method and an apparatus for positioning and navigating which comprise solutions to this problem.

The technical solutions provided by embodiments of the present disclosure may achieve the following advantageous effects.

By obtaining an initial coordinate of a user, obtaining a preset number of environment pictures within a preset geographic range corresponding to the initial coordinate, and obtaining an absolute coordinate corresponding to each environment picture from a preset correspondence relationship between different environment pictures and different absolute coordinates, obtaining a relative position between an object in the environment picture and the user for each environment picture, and determining current geographic position information of the user based on the relative position and the absolute coordinate, the problem in the background art that the weight, volume and production cost of the electronic device are increased due to employing hardware components such as gyro or electronic compass to obtain orientation of the user is solved. In the technical solutions provided by embodiments of the present disclosure, the geographic position information including the orientation of the user may be obtained without mounting hardware components such as gyro or electronic compass inside the electronic device, thereby the weight and volume of the electronic device may be reduced, and the production cost may be saved.

### BRIEF DESCRIPTION OF THE DRAWINGS

In order to explain the embodiments of the present disclosure more clearly, drawings for describing the embodiments will be given below.
Fig. 1 is an illustrative flow chart showing a method for positioning and navigating according to an exemplary embodiment;
Fig. 2A is an illustrative flow chart showing a method for positioning and navigating according to another exemplary embodiment;
Fig. 2B is a block diagram involved when obtaining a relative position in a method for positioning and navigating according to another exemplary embodiment;
Fig. 2C is another block diagram involved when obtaining a relative position in a method for positioning and navigating according to another exemplary embodiment;
Fig. 2D is still another block diagram involved when obtaining a relative position in a method for positioning and navigating according to another exemplary embodiment;
Fig. 2E is yet another block diagram involved when obtaining a relative position in a method for positioning and navigating according to another exemplary embodiment;
Fig. 2F is a block diagram involved when calculating geographic position information in a method for positioning and navigating according to another exemplary embodiment;
Fig. 2G is another block diagram involved when calculating geographic position information in a method for positioning and navigating according to another exemplary embodiment;
Fig. 2H is still another block diagram involved when calculating geographic position information in a method for positioning and navigating according to another exemplary embodiment;
Fig. 2I is yet another block diagram involved when calculating geographic position information in a method for positioning and navigating according to another exemplary embodiment;
Fig. 3 is a block diagram showing an apparatus for positioning and navigating according to an exemplary embodiment;
Fig. 4 is a block diagram showing an apparatus for positioning and navigating according to another exemplary embodiments; and
Fig. 5 is a block diagram showing an apparatus for positioning and navigating according to an exemplary embodiment.

Specific embodiments in this disclosure have been shown by way of example in the foregoing drawings and are hereinafter described in detail.

### DETAILED DESCRIPTION

The present disclosure will be further described in detail with reference to the accompanying drawings.

First of all, it should be indicated that in respective embodiments of the present disclosure, the electronic device involved may be a mobile phone, a tablet computer, an E-book reader, an MP3 (Moving Picture Experts Group Audio Layer III) player, an MP4 (Moving Picture Experts Group Audio Layer IV) player, a laptop portable computer, a desktop computer, or the like.

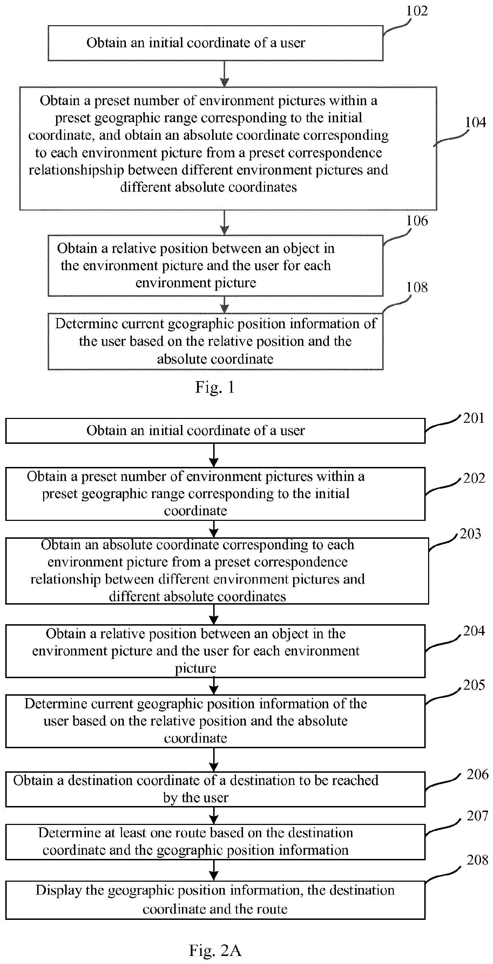

Fig. 1 is a flow chart showing a method for positioning and navigating according to an exemplary embodiment. The present embodiment is exemplified by applying the method for positioning and navigating to an electronic device. The method for positioning and navigating may include the following steps.

In step 102, an initial coordinate of a user is obtained.

In step 104, a preset number of environment pictures within a preset geographic range corresponding to the initial coordinate are obtained, and an absolute coordinate corresponding to each environment picture is obtained from a preset correspondence relationship between different environment pictures and different absolute coordinates.

In step 106, a relative position between an object in the environment picture and the user is obtained for each environment picture.

In step 108, current geographic position information of the user is determined based on the relative position and the absolute coordinate.

To sum up, in the method for positioning and navigating provided by the present embodiment, the problem in the background art that the weight, volume and production cost of the electronic device are increased due to employing hardware components such as gyro or electronic compass to obtain orientation of the user is solved by obtaining an initial coordinate of a user; by obtaining a preset number of environment pictures within a preset geographic range corresponding to the initial coordinate, and obtaining an absolute coordinate corresponding to each environment picture from a preset correspondence relationship between different environment pictures and different absolute coordinates; by obtaining a relative position between an object in the environment picture and the user for each environment picture; and by determining current geographic position information of the user based on the relative position and the absolute coordinate. Therefore, in the method for positioning and navigating provided by the present embodiment, the geographic position information including the orientation of the user may be obtained without mounting hardware components such as gyro or electronic compass inside the electronic device, thereby the weight and volume of the electronic device may be reduced, and the production cost may be saved.

Fig. 2A is a flow chart showing a method for positioning and navigating according to another exemplary embodiment. The present embodiment is exemplified by applying the method for positioning and navigating to an electronic device. The method for positioning and navigating may include the following steps.

In step 201, an initial coordinate of a user is obtained.

The electronic device obtains the initial coordinate of the user by positioning manners such as GPS, base station or Wi-Fi. The initial coordinate of the user is a coordinate corresponding to the user's current geographic position in an absolute coordinate system taking the earth as the coordinate system. Since the above three manners may occur different degrees of error, the initial coordinate of the user obtained by the electronic device under such condition may be regarded as a relatively rough value, that is, the initial coordinate may be not exactly the same as an actual coordinate of the geographic position where the user is currently and actually located.

For example, there may be an error of about 15 meters between the initial coordinate obtained by GPS positioning and the current actual coordinate of the user. For another example, there may be an error of tens or even hundreds of meters between the initial coordinate obtained by base station positioning or Wi-Fi positioning and the current actual coordinate of the user.

Besides, the aforesaid initial coordinate of the user obtained by positioning manners such as GPS, base station or Wi-Fi is a two-dimensional coordinate, in which the altitude of the geographic position where the user is actually located is not considered. In an embodiment, a three-dimensional initial coordinate may be obtained by the above three positioning manners, or further combining components such as pressure altimeter.

In step 202, a preset number of environment pictures within a preset geographic range corresponding to the initial coordinate are obtained.

After obtaining the initial coordinate of the user, the electronic device obtains a preset number of environment pictures within a preset geographic range corresponding to the initial coordinate.

This step may include the following sub-steps.

First, m candidate pictures within the preset geographic range corresponding to the initial coordinate are obtained.

A plurality of candidate pictures are pre-stored in the electronic device or a server corresponding to an application program providing the method for positioning and navigating involved in the present embodiment. The candidate pictures are usually pictures of landmark architectures or landscapes of various places, such as peaks, towers, high buildings, schools, and stores. The candidate pictures may be collected and obtained in advance by technicians in various places, or may be obtained by collecting pictures uploaded from various users.

Besides, a correspondence relationship between different candidate pictures and different absolute coordinates is stored in the electronic device or the server corresponding to the application program providing the method for positioning and navigating involved in the present embodiment. The absolute coordinate is a coordinate corresponding to the geographic position where the object in the candidate picture is actually located in an absolute coordinate system taking the earth as the coordinate system. Generally, the absolute coordinates have been modified and corrected for a long period of time, so it may be regarded that the absolute coordinate corresponding to each candidate picture is exact, that is, the absolute coordinate is capable of reflecting exactly the geographic position where the object in the candidate picture is actually located.

After obtaining the initial coordinate of the user, the electronic device determines a preset geographic range according to the initial coordinate. For example, a circular region taking the initial coordinate as the center and having a radius of 500 meters is the preset geographic range. Then, the electronic device obtains m candidate pictures whose absolute coordinates are within the preset geographic range.

Second, environment pictures of the preset number n are selected from the m candidate pictures, where m≥n>0.

In a first possible implementation, the m candidate pictures are ordered according to a preset priority so as to obtain a candidate picture sequence, and environment pictures of the preset number n are selected from the candidate picture sequence.

After obtaining m candidate pictures within the preset geographic range corresponding to the initial coordinate, the electronic device may order the m candidate pictures according to a preset priority so as to obtain a candidate picture sequence. For example, the electronic device orders the candidate pictures according to the distance between the absolute coordinates corresponding to different candidate pictures and the initial coordinate, so as to obtain a candidate picture sequence. The candidate picture sequence from front to rear sequentially include m candidate pictures with the distances between absolute coordinates and the initial coordinate from near to far.

Then, the electronic device automatically selects environment pictures of the preset number n from the candidate picture sequence. Generally, the electronic device selects candidate pictures of the preset number n with higher priority as environment pictures. The environment pictures refer to pictures of environment surrounding the geographic position where the user is currently and actually located. The preset number n is preset by researchers, and may be preset as 1, 2 or 3 according to different algorithms provided later by the present embodiment. Surely, the present embodiment does not limit other possible values of the preset number n.

In a second possible implementation, a part or all of the m candidate pictures are displayed, a selection signal corresponding to the candidate pictures is received, and environment pictures of the preset number n are determined according to the selection signal.

After obtaining m candidate pictures, the electronic device may also display a part or all of the m candidate pictures, that is, the candidate pictures are shown to the user; then, the user selects candidate pictures of the preset number n from these candidate pictures as environment pictures. Under such condition, according to current and actual surrounding environment, the user may select the environment pictures corresponding to objects that can be clearly seen by the user himself or have a nearer distance from the user himself, which may improve the accuracy of subsequent positioning to a certain extent, and may improve the interaction and interest.

In step 203, an absolute coordinate corresponding to each environment picture is obtained from a preset correspondence relationship between different environment pictures and different absolute coordinates.

It has been introduced in the above step 202 that a correspondence relationship between different candidate pictures and different absolute coordinates is stored in the electronic device or the server corresponding to an application program providing the method for positioning and navigating involved in the present embodiment. The absolute coordinate is a coordinate corresponding to the geographic position where the object in the candidate picture is actually located in an absolute coordinate system taking the earth as the coordinate system. After obtaining environment pictures of the preset number, the electronic device obtains the absolute coordinate corresponding to each environment picture from the above correspondence relationship.

In step 204, a relative position between an object in the environment picture and the user is obtained for each environment picture.

The electronic device obtains a relative position between an object in the environment picture and the user for each environment picture. The relative position may be obtained by the interaction with the user. This step may include the following sub-steps.

First, the environment picture and guide information are displayed, the guide information being configured to guide the user to face the object in the environment picture, and/or guide the user to move the environment picture in a corresponding direction according to the relative position between the object in the environment picture and the user himself, and/or guide the user to move the environment picture to a corresponding position according to the relative position between the object in the environment picture and the user himself.

Second, an input signal triggered by the user according to the guide information is received.

Third, the relative position between the object in the environment picture and the user is determined according to the input signal.

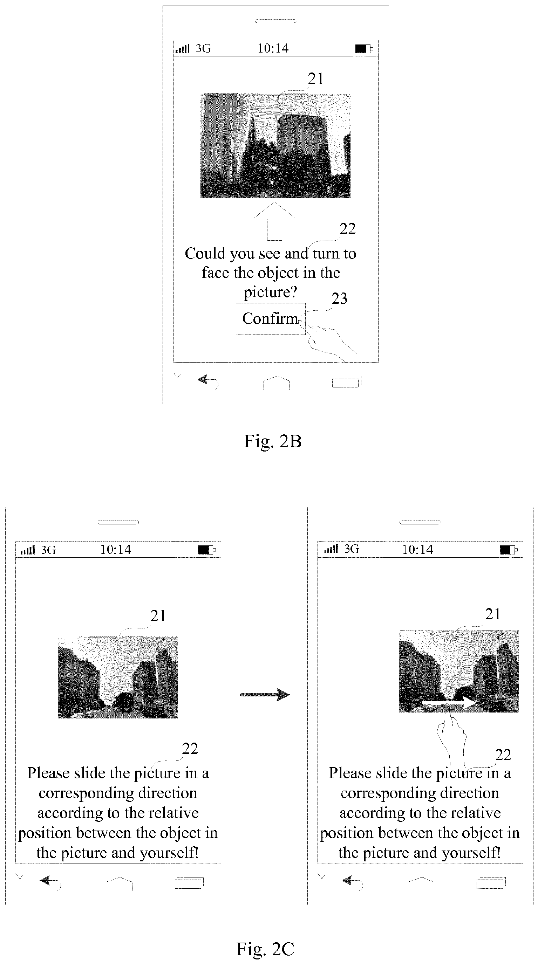

Referring to Fig. 2B, when the present number n=1, the electronic device displays the environment picture 21 and guide information 22. For example, the guide information 22 is "Could you see and turn to face the object in the picture?". After seeing the environment picture 21 and guide information 22, the user turns to face the object in the environment picture 21 according to the hint of the guide information 21, and presses a "confirm" button 23. After receiving the confirm signal that the user has pressed the "confirm" button 23, the electronic device obtains the relative position between the object in the environment picture and the user, and the relative position is that the object in the environment picture is directly in front of the user.

Referring to Fig. 2C, when the present number n=1, the electronic device still displays the environment picture 21 and guide information 22. Under such condition, the guide information 22 may be "Please slide the picture in a corresponding direction according to the relative position between the object in the picture and yourself!". After seeing the environment picture 21 and guide information 22, the user firstly views the relative position (e.g., directly on the right) between the object in the environment picture 21 and the user himself according to the hint of the guide information 22, and then slides the environment picture 21 in a screen of the electronic device for a certain distance in a direction directly right to the environment picture 21. After detecting the user's sliding signal, the electronic device determines the relative position between the object in the environment picture and the user according to the sliding locus, and the relative position is that the object in the environment picture is directly on the right of the user.

Surely, the sliding direction may be arbitrary, and any sliding direction uniquely corresponds to one relative position. For example, sliding upward corresponds to that the object in the environment picture is directly in front of the user, sliding rightward corresponds to that the object in the environment picture is directly on the right of the user, sliding leftward corresponds to that the object in the environment picture is directly on the left of the user, sliding downward corresponds to that the object in the environment picture is in direct rear of the user, sliding upper right 45° corresponds to that the object in the environment picture is in front right 45° of the user, sliding upper left 30° corresponds to that the object in the environment picture is on front left 30° of the user, and so on.

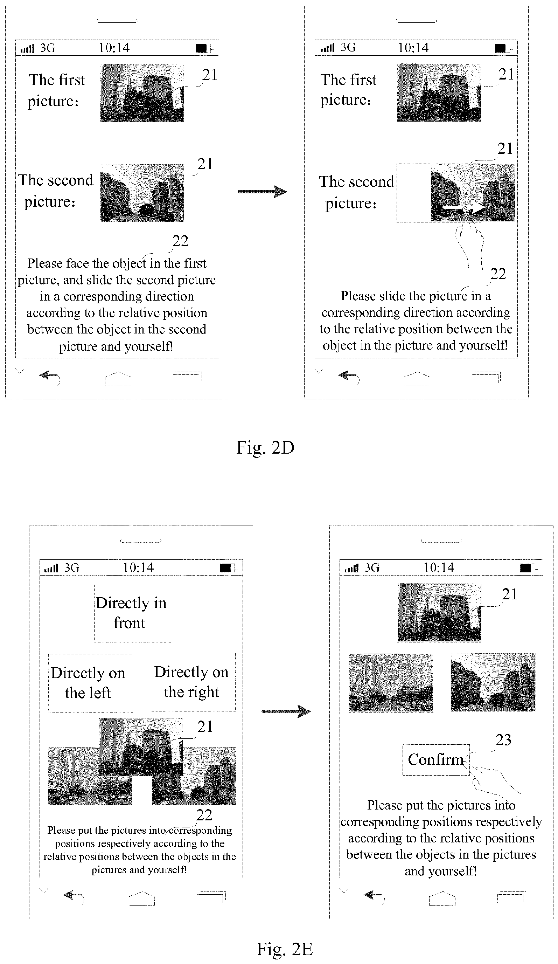

Referring to Fig. 2D, when the preset number n=2, the electronic device still displays the environment pictures 21 and guide information 22. Under such condition, the guide information 22 may be "Please face the object in the first picture, and slide the second picture in a corresponding direction according to the relative position between the object in the second picture and yourself!". After seeing the two environment pictures 21 and guide information 22, according to the hint of the guide information 22, the user firstly turns to face the object in the first environment picture 21, then views the relative position (e.g., directly on the right) between the object in the second environment picture 21 and the user himself; and then slides the second environment picture 21 in a screen of the electronic device for a certain distance in a direction directly right to the second environment picture 21. After detecting the user's sliding signal, the electronic device obtains the relative positions between the objects in the two environment pictures and the user respectively, and the relative position is that the object in the first environment picture is directly in front of the user, and the object in the second environment picture is directly on the right of the user.

Surely, in other possible implementations, when the preset number n=2, the guide information 22 may also be "Please slide the pictures in corresponding directions respectively according to the relative positions between the objects in the pictures and yourself!". Thus, the electronic device may determine the relative positions between the objects in the two environment pictures and the user respectively according to two sliding locus.

Referring to Fig. 2E, when the preset number n=3, the electronic device still displays the environment pictures 21 and guide information 22. Under such condition, the guide information 22 may be "Please put the pictures into corresponding positions respectively according to the relative positions between the objects in the pictures and yourself!". After seeing the three environment pictures 21 and guide information 22, according to the hint of the guide information 22, the user views the relative positions (including directly in front, directly on the left and directly on the right) between the objects in the three environment pictures 21 and the user himself respectively; then put the three environment pictures 21 into corresponding boxes respectively, and then presses the "confirm" button 23. After receiving the confirm signal that the user has pressed the "confirm" button 23, the electronic device obtains the relative positions between the objects in the environment pictures and the user respectively, and the relative positions include the relation that the object in the first environment picture is directly in front of the user, the object in the second environment picture is directly on the right of the user, and the object in the third environment picture is directly on the left of the user.

Surely, Fig. 2E only illustrates a relatively simple implementation. In other possible implementations, it is not necessarily limited to the three relative positions of directly in front, directly on the left and directly on the right. The implementation in Fig. 2C may still be referred to, and the relative positions between the objects in the environment pictures and the user may be obtained according to sliding locus of any angular degree, which will not be elaborated herein.

In step 205, current geographic position information of the user is determined based on the relative position and the absolute coordinate.

After obtaining the relative position between the object in each environment picture and the user and the absolute coordinate of the object in each environment picture, the electronic device calculates current geographic position information of the user based on the relative position and the absolute coordinate. The geographic position information includes the actual coordinate and orientation of the user.

Hereinafter, for different implementations shown by Fig. 2B to Fig. 2E, the calculations of the geographic position information will be respectively introduced and described in detail.

In a first possible implementation, it is exemplified with the preset number of n=1.

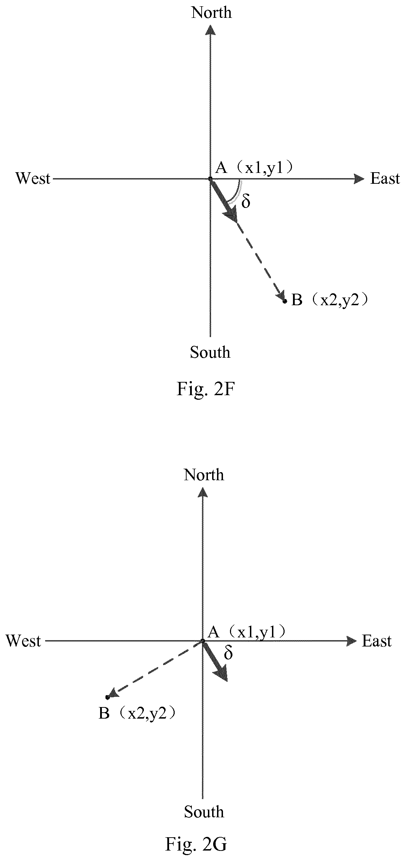

Referring to Fig. 2B and Fig. 2F, or Fig. 2C and Fig. 2G, when the number of environment pictures is 1, current orientation of the user is determined based on the relative position, the absolute coordinate and the initial coordinate, and the initial coordinate is determined as the actual coordinate of the user.

First, the initial coordinate is determined as the actual coordinate of the user.

In the case where the number of environment pictures is 1, the initial coordinate is directly used as the actual coordinate. Although the initial coordinate may be not very exact, it can reflect, within a permissible error-range, the geographic position where the user is currently and actually located. Most importantly, the algorithm may be simplified, and the efficiency for positioning and navigating may be improved.

Second, current orientation of the user is determined based on the relative position, the absolute coordinate and the initial coordinate.

The above second sub-step may further include the following two sub-steps:
1. A reference direction from coordinate point A of the initial coordinate to coordinate point B of the absolute coordinate is obtained.
   Referring to Fig. 2F or Fig. 2G, it is assumed that in the absolute coordinate system (i.e., the two-dimensional rectangular coordinate system in the figure, wherein in the vertical direction, assuming an up direction as north and a down direction as south, in the horizontal direction, assuming a left direction as west and a right direction as east), the coordinate point of initial coordinate is A(x1, y1), and the coordinate point B of absolute coordinate is B(x2, y2), a reference direction from the coordinate point A(x1, y1) of the initial coordinate to the coordinate point B(x2, y2) of the absolute coordinate is obtained (shown by a dotted arrow in the figure).
2. The orientation is determined based on the reference direction and the relative position.
   Referring to Fig. 2B and Fig. 2F, when the relative position between the object in the environment picture and the user is that the object is directly in front of the user, the reference direction from coordinate point A(x1, y1) to coordinate point B(x2, y2) is the orientation of the user (shown by a solid arrow in Fig. 2F). Then, an angle δ between this orientation and due east direction in the absolute coordinate system may be further calculated, i.e., δ=arctan| (y2-y1) / (x2-x1) |.

Referring to Fig. 2C and Fig. 2G, when the relative position between the object in the environment picture and the user is that the object in the environment picture is directly on the right of the user, the orientation of the user is a direction obtained by deflecting the reference direction from coordinate point A(x1, y1) to coordinate point B(x2, y2) by 90° counterclockwise (shown by a solid arrow in Fig. 2G). Then, an angle δ between this orientation and due east direction in the absolute coordinate system may be further calculated, i.e., δ=arctan| (x2-x1) / (y2-y1)|.

Besides, when the relative position is that the object in the environment picture is directly on the left of the user, the orientation of the user is a direction obtained by deflecting the reference direction from coordinate point A to coordinate point B by 90° clockwise (not shown); or, when the relative position is that the object in the environment picture is on front left 30° of the user, the orientation of the user is a direction obtained by deflecting the reference direction from coordinate point A to coordinate point B by 30° clockwise. In this analogy, the electronic device may determine the orientation of the user based on the reference direction and the relative position.

It is noted that, the above embodiments are exemplified by the angle δ between the orientation of the user and due east direction in the absolute coordinate system; in actual applications, after obtaining the orientation of the user, an angle between this orientation and any direction (including due east direction, due north direction, due west direction and so on) in the absolute coordinate system may be calculated.

In a second possible implementation, it is exemplified with the preset number of n=2.

When the number of environment pictures is 2, current orientation and actual coordinate of the user are determined based on the relative position, the absolute coordinate and the initial coordinate.

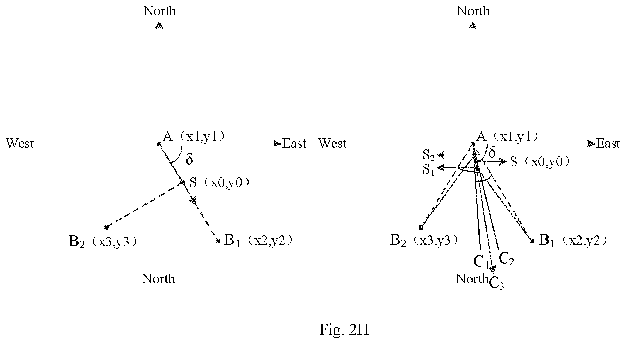

First, referring to the left portions of Fig. 2D and Fig. 2H, when the preset number n=2, a straight line AB₁ which passes through the coordinate point A of the initial coordinate and a first coordinate point B₁ in the absolute coordinate is obtained; the actual coordinate is determined based on a second coordinate point B₂ in the absolute coordinate, the straight line AB₁ and two of the relative positions; and the orientation is determined based on the actual coordinate and at least one of the relative positions.

### 1. A straight line AB₁ which passes through the coordinate point A of the initial coordinate and a first coordinate point B₁ in the absolute coordinate is obtained.

In the case where the number of environment pictures is 2, firstly, one coordinate point B₁(x2, y2) is selected from two coordinate points of absolute coordinate, and then, a straight line AB₁ is obtained by linking the coordinate point A(x1, y1) of the initial coordinate and the coordinate point B₁(x2, y2).

Referring to the left portion of Fig. 2H, in the present embodiment, it is assumed that the relative position between the object corresponding to the first coordinate point B₁(x2, y2) selected in the absolute coordinate and the user is that the object is directly in front of the user. A straight line AB₁ (shown by dotted line) is obtained by linking the coordinate point A(x1, y1) of the initial coordinate and the first coordinate point B₁(x2, y2) in the absolute coordinate.

### 2. The actual coordinate is determined based on a second coordinate point B₂ in the absolute coordinate, the straight line AB₁ and two of the relative positions.

Referring to Fig. 2D, because the relative position between the object corresponding to the first coordinate point B₁(x2, y2) in the absolute coordinate and the user is that the object is directly in front of the user, and the relative position between the object corresponding to the second coordinate point B₂(x3, y3) in the absolute coordinate and the user is that the object is directly on the left of the user, ∠B₁SB₂, which is constituted by taking the coordinate point S (x0, y0) of the user's actual coordinate as the vertex and taking the straight line SB₁ and the straight line SB₂ as two sides of the angle, should be 90°; thus, by drawing a vertical line B₂S of the straight line AB₁ which passes through the coordinate point B₂, the coordinate (x0, y0) of the perpendicular foot S is the actual coordinate.

Besides, assuming that the relative position between the object corresponding to the first coordinate point B₁(x2, y2) in the absolute coordinate and the user is that the object is on front left 30° of the user, and the relative position between the object corresponding to the second coordinate point B₂(x3, y3) in the absolute coordinate and the user is that the object is on front right 45° of the user, ∠B₁SB₂, which is constituted by taking the coordinate point S (x0, y0) of the user's actual coordinate as the vertex and taking straight line SB₁ and straight line SB₂ as two sides of the angle, should be 75°; thus, a point S may be found on straight line AB₁ such that ∠B₁SB₂=75°, so the coordinate (x0, y0) of the point S is the actual coordinate.

### 3. The orientation is determined based on the actual coordinate and at least one of the relative positions.

After obtaining the actual coordinate S (x0, y0), the orientation of the user is determined based on one or two of the relative positions. Because the relative position between the object corresponding to the first coordinate point B₁(x2, y2) in the absolute coordinate and the user is that the object is directly in front of the user, the orientation of the user is the direction of the radial line SB₁ (shown by solid arrow in the figure). Then, an angle δ between this orientation and due east direction in the absolute coordinate system may be further calculated. In the embodiment shown by the left portion of Fig. 2H, δ=arctan |(y0-y1)/(x0-x1)|.

It is noted that, by the calculation method provided by the left portion of Fig. 2H, there is a higher requirement for selecting the first coordinate point B₁ in two absolute coordinates. The accuracy of the relative position between the object corresponding to the first coordinate point B₁ and the user directly relates to the accuracy of the finally calculated actual coordinate and orientation. Thus, the coordinate point corresponding to the object whose relative position is directly in front of the user is usually selected as the first coordinate point B₁.

It is also noted that, because the initial coordinates of the user obtained by different positioning manners such as GPS, base station or Wi-Fi are different, and GPS positioning has a higher accuracy than base station or Wi-Fi positioning, thus, when the GPS positioning function of the electronic device is turned on, the midpoint of the segment AS in the left portion of Fig. 2H may be selected as the coordinate point of the user's actual coordinate; and when the GPS positioning function of the electronic device is turned off, the point S in the left portion of Fig. 2H may be directly selected as the coordinate point of the user's actual coordinate. In actual applications, different algorithms may be selected as per actual requirements to obtain the user's actual coordinate. The present embodiment doesn't impose particular limitations on this.

The left portion of Fig. 2H shows a possible calculation manner when the number of environment pictures is 2. Hereinafter, another possible calculation manner when the number of environment pictures is 2 will be introduced in conjunction with the right portion of Fig. 2H.

Second, referring to right portions of Fig. 2D and Fig. 2H, when the preset number n=2, straight line AB₁ which passes through the coordinate point A of the initial coordinate and a first coordinate point B₁ in the absolute coordinate and straight line AB₂ which passes through the coordinate point A of the initial coordinate and a second coordinate point B₂ in the absolute coordinate are obtained respectively; the orientation is determined based on the straight line AB₁, the straight line AB₂ and two of the relative positions; and the actual coordinate is determined based on the orientation and at least one of the relative positions.

1. Straight line AB₁ which passes through the coordinate point A of the initial coordinate and a first coordinate point B₁ in the absolute coordinate and straight line AB₂ which passes through the coordinate point A of the initial coordinate and a second coordinate point B₂ in the absolute coordinate are obtained respectively.

In the present embodiment, it is assumed that the relative position between the object in the first environment picture (which is obtained by the electronic device in the above step 203) and the user is that the object is on front left 30° of the user, and the relative position between the object in the second environment picture and the user is that the object is on front right 45° of the user. Referring to the right portion of Fig. 2H, straight line AB₁ is obtained by linking the first coordinate point B₁(x2, y2) in the absolute coordinate and the coordinate point A(x1, y1) of the initial coordinate; and straight line AB₂ (shown by dotted lines) is obtained by linking the second coordinate point B₂(x3, y3) in the absolute coordinate and the coordinate point A(x1, y1) of the initial coordinate.

### 2. The orientation is determined based on the straight line AB₁, the straight line AB₂ and two of the relative positions.

First, a first candidate orientation is determined based on the straight line AB₁ and the relative position between the object in the first environment picture and the user. For example, because the relative position between the object in the first environment picture and the user is that the object is on front left 30° of the user, ∠B₁AC₁ is formed by taking A(x1, y1) as the vertex of the angle, taking the straight line AB₁ as one side of the angle, and then rotating the straight line AB₁ by 30° counterclockwise. The direction of the radial line AC₁ is the first candidate direction.

Then, a second candidate orientation is determined based on straight line AB₂ and the relative position between the object in the second environment picture and the user. For example, because the relative position between the object in the second environment picture and the user is that the object is on front right 45° of the user, ∠B₂AC₂ is formed by taking A(x1, y1) as the vertex of the angle, taking straight line AB₂ as one side of the angle, and rotating the straight line AB₂ by 45° clockwise. The direction of the radial line AC₂ is the second candidate direction.

Then, an angular bisector AC₃ of ∠C₁AC₂ is provided. The direction of radial line AC₃ is the orientation of the user.

### 3. The actual coordinate is determined based on the orientation and at least one of the relative positions.

After determining the orientation of the user, point S₁ and point S₂ are selected on straight line AC₃ such that ∠B₁S₁C₃=30° and ∠B₂S₂C₃=45°; when point S₁ and point S₂ coincide with each other, point S₁ or point S₂ is selected as the coordinate point S (x0, y0) of the user's actual coordinate; and when point S₁ and point S₂ do not coincide with each other, the midpoint of segment S₁S₂ is selected as the coordinate point S (x0, y0) of the user's actual coordinate.

Then, an angle δ between the orientation of the user and due east direction in the absolute coordinate system may be further calculated. In the embodiment shown by the right portion of Fig. 2H, δ= arctan| (y₀-y1) / (x0-x1)|.

It is noted that, in the calculation method provided by the right portion of Fig. 2H, the position relations between the objects in two environment pictures and the user are simultaneously considered when calculating the orientation and actual coordinate of the user, and the orientation and actual coordinate of the user are determined by averaging algorithm based on two candidate orientations, so that stability of calculation result is improved.

In a third possible implementation, it is exemplified with the preset number of n=3.

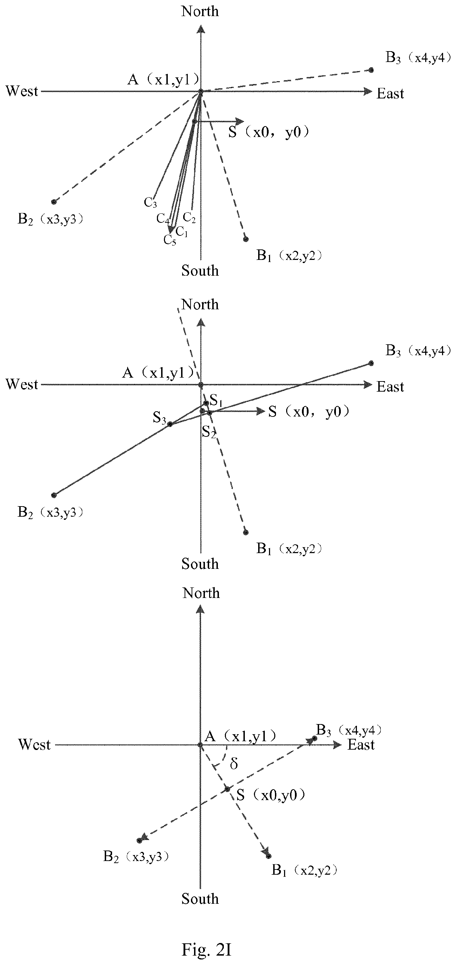

First, referring to Fig. 2E and the upper portion of Fig. 2I, when the preset number n=3, straight line AB₁ which passes through the coordinate point A of the initial coordinate and a first coordinate point B₁ in the absolute coordinate, straight line AB₂ which passes through the coordinate point A of the initial coordinate and a second coordinate point B₂ in the absolute coordinate, and straight line AB₃ which passes through the coordinate point A of the initial coordinate and a third coordinate point B₃ in the absolute coordinate are obtained respectively; the orientation is determined based on the straight line AB₁, the straight line AB₂, the straight line AB₃ and three of the relative positions; and the actual coordinate is determined based on the orientation and at least one of the relative positions.
1. Straight line AB₁ which passes through the coordinate point A of the initial coordinate and a first coordinate point B₁ in the absolute coordinate, straight line AB₂ which passes through the coordinate point A of the initial coordinate and a second coordinate point B₂ in the absolute coordinate, and straight line AB₃ which passes through the coordinate point A of the initial coordinate and a third coordinate point B₃ in the absolute coordinate are obtained respectively.
   In the present embodiment, it is assumed that the relative position between the object in the first environment picture (which is obtained by the electronic device in the above step 203) and the user is that the object is on front left 30° of the user, the relative position between the object in the second environment picture and the user is that the object is on front right 45° of the user, and the relative position between the object in the third environment picture and the user is that the object is on front left 120° of the user. Referring to the upper portion of Fig. 2I, straight line AB₁ is obtained by linking the first coordinate point B₁(x2, y2) in the absolute coordinate and the coordinate point A(x1, y1) of the initial coordinate; straight line AB₂ is obtained by linking the second coordinate point B₂(x3, y3) in the absolute coordinate and the coordinate point A(x1, y1) of the initial coordinate; and straight line AB₃ (shown by dotted lines) is obtained by linking the third coordinate point B₃(x4, y4) in the absolute coordinate and the coordinate point A(x1, y1) of the initial coordinate.
2. The orientation is determined based on the straight line AB₁, the straight line AB₂, the straight line AB₃ and three of the relative positions.
   (1) A first candidate orientation is determined based on straight line AB₁ and the relative position between the object in the first environment picture and the user. For example, because the relative position between the object in the first environment picture and the user is that the object is on front left 30° of the user, ∠B₁AC₁ is provided by taking A(x1, y1) as the vertex of the angle, taking straight line AB₁ as one side of the angle, and rotating the straight line AB₁ by 30° counterclockwise. The direction of the radial line AC₁ is the first candidate direction.
   (2) A second candidate orientation is determined based on straight line AB₂ and the relative position between the object in the second environment picture and the user. For example, because the relative position between the object in the second environment picture and the user is that the object is on front right 45° of the user, ∠B₂AC₂ is provided by taking A(x1, y1) as the vertex of the angle, taking straight line AB₂ as one side of the angle, and rotating the straight line AB₂ by 45° clockwise. The direction of the radial line AC₂ is the second candidate direction.
   (3) A third candidate orientation is determined based on straight line AB₃ and the relative position between the object in the third environment picture and the user. For example, because the relative position between the object in the third environment picture and the user is that the object is on front left 120° of the user, ∠B₃AC₃ is provided by taking A(x1, y1) as the vertex of the angle, taking straight line AB₃ as one side of the angle, and rotating the straight line AB₃ by 120° clockwise. The direction of the radial line AC₃ is the third candidate direction.
   (4) Angular bisector AC₄ of ∠C₂AC₃ is provided, and angular bisector AC₅ of ∠C₁AC₄ is provided. The direction of radial line AC₅ is the orientation of the user.
3. The actual coordinate is determined based on the orientation and at least one of the relative positions.

After determining the orientation of the user, point S₁, point S₂ and point S₃ (not shown) are selected on straight line AC₅ such that ∠B₁S₁C₅=30°, ∠B₂S₂C₅=45° and ∠B₃S₃C₅=120°; when point S₁, point S₂ and point S₃ coincide with each other, point S₁ or point S₂ or point S₃ is selected as the coordinate point S (x0, y0) of the user's actual coordinate; and when point S₁, point S₂ and point S₃ do not coincide with each other, the midpoint of a segment constituted by point S₁, point S₂ and point S₃ is selected as the coordinate point S (x0, y0) of the user's actual coordinate. Then, an angle δ between the orientation of the user and due east direction in the absolute coordinate system may be further calculated, i.e., δ= arctan| (y0-y1) / (x0-x1)|.

The above first calculation method when the number of environment pictures is 3 is the same as or similar to the second calculation method when the number of environment pictures is 2, so the second calculation method when the number of environment pictures is 2 may be referred to.

Second, referring to Fig. 2E and the middle portion of Fig. 2I, when the preset number n=3,
1. Straight line AB₁ which passes through the coordinate point A of the initial coordinate and a first coordinate point B₁ in the absolute coordinate is obtained.
   Referring to the middle portion of Fig. 2I, in the present embodiment, it is assumed that the relative position between the object corresponding to the selected first coordinate point B₁(x2, y2) in the absolute coordinate and the user is that the object is on front left 30° of the user. Straight line AB₁ (shown by dotted line) is obtained by linking the coordinate point A(x1, y1) of the initial coordinate and the first coordinate point B₁(x2, y2) in the absolute coordinate.
2. The actual coordinate is determined based on a second coordinate point B₂ and a third coordinate point B₃ in the absolute coordinate, the straight line AB₁ and three of the relative positions.
   Because the relative position between the object in the first environment picture and the user is that the object is on front left 30° of the user, the relative position between the object in the second environment picture and the user is that the object is on front right 45° of the user, and the relative position between the object in the third environment picture and the user is that the object is on front left 120° of the user, point S₁ and point S₂ are selected on the straight line AB₁ such that ∠B₂S₁B₁=30°+45°=75° and ∠B₃S₂B₁=120°-30°=90°.
   Referring to the middle portion of Fig. 2I, after obtaining point S₁ and point S₂, the coordinate of the midpoint of segment S₁S₂ may be selected as the actual coordinate of the user (not shown); or, an inverted extension line may be provided along B₃S₂ to cross with B₂S₁ at point S₃, and the coordinate (x0, y0) of midpoint S of ΔS₁S₂S₃ may be selected as the actual coordinate of the user.
3. The orientation is determined based on the actual coordinate and at least one of the relative positions.

After obtaining the actual coordinate S(x0, y0), the orientation of the user is determined based on at least one of the relative positions.

The above second calculation method when the number of environment pictures is 3 is the same as or similar to the first calculation method when the number of environment pictures is 2, so the first calculation method when the number of environment pictures is 2 may be referred to.

Hereinafter, referring to Fig. 2E and the lower portion of Fig. 2I, an algorithm used when the relative positions between the objects in three environment pictures and the user are directly in front, directly on the left and directly on the right is given below:
1. whether the three relative positions meet a preset condition is detected, and the preset condition is: one of the relative positions is that the object is directly in front of the user, another one of the relative positions is that the object is directly on the left of the user, and still another one of the relative positions is that the object is directly on the right of the user.
2. If it is detected that the preset condition is met, straight line B₂B₃ which passes through coordinate point B₂ corresponding to the absolute coordinate of the object with the relative position of directly on the left of the user and coordinate point B₃ corresponding to the absolute coordinate of the object with the relative position of directly on the right of the user is obtained.
3. Vertical line B₁S between coordinate point B₁ corresponding to the absolute coordinate of the object with the relative position of directly in front of the user and the straight line B₂B₃ is obtained.
4. The coordinate of perpendicular foot S is determined as the actual coordinate, and the direction from the perpendicular foot S to the coordinate point B₁ is determined as the orientation.

Then, an angle δ between the orientation of the user and due east direction in the absolute coordinate system may be further calculated, i.e., δ= arctan| (y0-y1) / (x0-x1)|.

In the calculation method provided by the lower portion of Fig. 2I, the initial coordinate is not necessary during calculating the actual coordinate and orientation of the user, thus, this calculation method is particularly adapted to locate the geographic position where the user actually is when the obtained initial coordinate is not accurate. Further, based on the method for positioning and navigating provided by the above embodiment in combination with three-dimensional initial coordinate, environment pictures with different altitude heights may be obtained, so as to realize positioning and navigating in different floors indoor.

Besides, after obtaining current geographic position information of the user, the electronic device may further perform the following steps.

In step 206, a destination coordinate of a destination to be reached by the user is obtained.

The electronic device obtains a destination coordinate of a destination to be reached by the user. The name of the destination is usually inputted by the user, then, the electronic device obtains the destination coordinate of the destination in the absolute coordinate system according to the name of the destination inputted by the user.

In step 207, at least one route is determined based on the destination coordinate and the geographic position information.

The electronic device determines at least one route based on the destination coordinate and the geographic position information. Since the geographic position information contains the current actual coordinate of the user, after obtaining the destination coordinate and the actual coordinate, the electronic device may determine for the user at least one route from the actual coordinate to the destination coordinate, that is, the route from the geographic position where the user is currently located to the destination to be reached by the user.

In step 208, the geographic position information, the destination coordinate and the route are displayed.

Then, the electronic device displays the orientation of the user, the actual coordinate of the user, the destination coordinate and the route, so as to guide the user to reach the destination according to the displayed information.

To sum up, in the method for positioning and navigating provided by the present embodiment, the problem in the background art that the weight, volume and production cost of the electronic device are increased due to employing hardware components such as gyro or electronic compass to obtain orientation of the user is solved by obtaining an initial coordinate of a user; by obtaining a preset number of environment pictures within a preset geographic range corresponding to the initial coordinate, and obtaining an absolute coordinate corresponding to each environment picture from a preset correspondence relationship between different environment pictures and different absolute coordinates; by obtaining a relative position between an object in the environment picture and the user for each environment picture; and by determining current geographic position information of the user based on the relative position and the absolute coordinate. In the method for positioning and navigating provided by the present embodiment, the geographic position information including the orientation of the user may be obtained without mounting hardware components such as gyro or electronic compass inside the electronic device, thereby the weight and volume of the electronic device may be reduced, and the production cost may be saved.

Further, as for different numbers of environment pictures, the present embodiment provides a plurality of methods for calculating the orientation and actual coordinate of the user, some algorithms are simple and have a high efficiency for positioning and navigating; some algorithms determine the orientation and actual coordinate of the user by averaging two or three candidate orientations, so as to improve the stability of calculation result; and some algorithms have a high interaction with the user. In actual applications, different calculation methods may be adopted according to different requirements.

Apparatus embodiments of the present disclosure, which may be configured to perform the method embodiments of the present disclosure, are set forth below. As to the undisclosed details of the apparatus embodiments of the present disclosure, please refer to the method embodiments of the present disclosure.

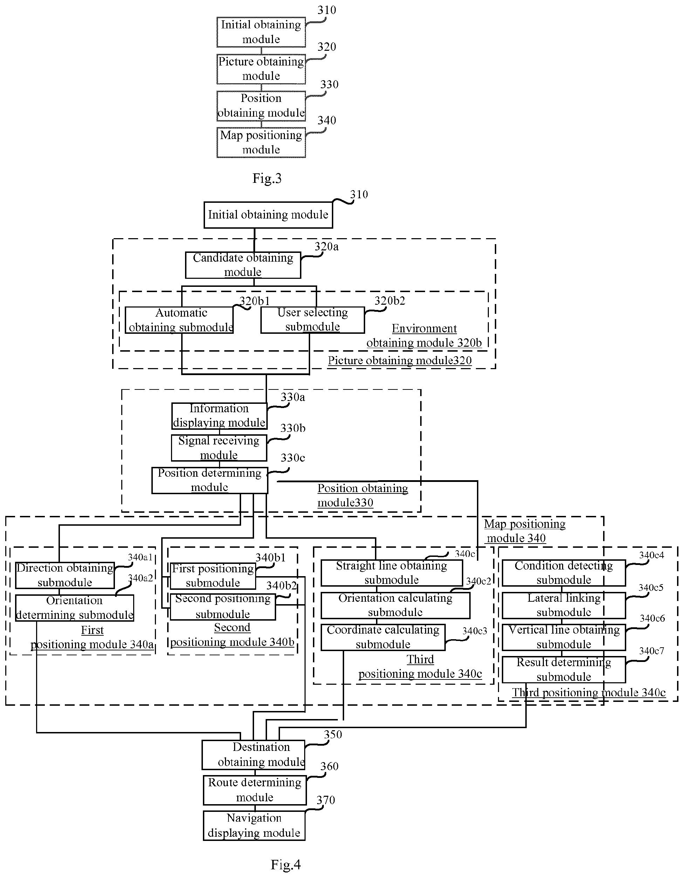

Fig. 3 is a block diagram showing an apparatus for positioning and navigating according to an exemplary embodiment. The apparatus for positioning and navigating may be implemented as a part or all of an electronic device by software, hardware, or a combination thereof. The apparatus for positioning and navigating may include an initial obtaining module 310, a picture obtaining module 320, a position obtaining module 330 and a map positioning module 340.

The initial obtaining module 310 is configured to obtain an initial coordinate of a user.

The picture obtaining module 320 is configured to obtain a preset number of environment pictures within a preset geographic range corresponding to the initial coordinate, and obtain an absolute coordinate corresponding to each environment picture from a preset correspondence relationship between different environment pictures and different absolute coordinates.

The position obtaining module 330 is configured to obtain a relative position between an object in the environment picture and the user for each environment picture.

The map positioning module 340 is configured to determine current geographic position information of the user based on the relative position and the absolute coordinate.

To sum up, in the apparatus for positioning and navigating provided by the present embodiment, by obtaining an initial coordinate of a user, obtaining a preset number of environment pictures within a preset geographic range corresponding to the initial coordinate, and obtaining an absolute coordinate corresponding to each environment picture from a preset correspondence relationship between different environment pictures and different absolute coordinates, obtaining a relative position between an object in the environment picture and the user for each environment picture, and determining current geographic position information of the user based on the relative position and the absolute coordinate, the problem in the background art that the weight, volume and production cost of the electronic device are increased due to employing hardware components such as gyro or electronic compass to obtain orientation of the user is solved. In the apparatus for positioning and navigating provided by the present embodiment, the geographic position information including the orientation of the user may be obtained without mounting hardware components such as gyro or electronic compass inside the electronic device, thereby the weight and volume of the electronic device may be reduced, and the production cost may be saved.

Fig. 4 is a block diagram showing an apparatus for positioning and navigating according to another exemplary embodiment. The apparatus for positioning and navigating may be implemented as a part or all of an electronic device by software, hardware or a combination thereof. The apparatus for positioning and navigating may include an initial obtaining module 310, a picture obtaining module 320, a position obtaining module 330, a map positioning module 340, a destination obtaining module 350, a route determining module 360 and a navigation displaying module 370.

The initial obtaining module 310 is configured to obtain an initial coordinate of a user.

The picture obtaining module 320 is configured to obtain a preset number of environment pictures within a preset geographic range corresponding to the initial coordinate, and obtain an absolute coordinate corresponding to each environment picture from a preset correspondence relationship between different environment pictures and different absolute coordinates.

Optionally, the picture obtaining module 320 includes a candidate obtaining module 320a and an environment obtaining module 320b.

The candidate obtaining module 320a is configured to obtain m candidate pictures within the preset geographic range corresponding to the initial coordinate.

The environment obtaining module 320b is configured to select environment pictures of the preset number n from the m candidate pictures.

Where m≥n>0.

Optionally, the environment obtaining module 320b includes an automatic obtaining submodule 320b1; or a user selecting submodule 320b2.

The automatic obtaining submodule 320b1 is configured to order the m candidate pictures according to a preset priority so as to obtain a candidate picture sequence, and select environment pictures of the preset number n from the candidate picture sequence.

The user selecting submodule 320b2 is configured to display a part or all of the m candidate pictures, receive a selection signal corresponding to the candidate pictures, and determine environment pictures of the preset number n according to the selection signal.

The position obtaining module 330 is configured to obtain a relative position between an object in the environment picture and the user for each environment picture.

Optionally, the position obtaining module 330 includes an information displaying module 330a, a signal receiving module 330b and a position determining module 330c.

The information displaying module 330a is configured to display the environment picture and guide information, the guide information being configured to guide the user to face the object in the environment picture, and/or guide the user to move the environment picture in a corresponding direction according to the relative position between the object in the environment picture and the user himself, and/or guide the user to move the environment picture to a corresponding position according to the relative position between the object in the environment picture and the user himself.

The signal receiving module 330b is configured to receive an input signal triggered by the user according to the guide information.

The position determining module 330c is configured to determine the relative position between the object in the environment picture and the user according to the input signal.

The map positioning module 340 is configured to determine current geographic position information of the user based on the relative position and the absolute coordinate.

Optionally, the map positioning module 340 includes a first positioning module 340a and/or a second positioning module 340b and/or a third positioning module 340c.

The first positioning module 340a is configured to, when the number of the environment pictures is 1, determine current orientation of the user based on the relative position, the absolute coordinate and the initial coordinate, and determine the initial coordinate as an actual coordinate of the user.

Optionally, the first positioning module 340a includes a direction obtaining submodule 340a1 and an orientation determining submodule 340a2.

The direction obtaining submodule 340a1 is configured to obtain a reference direction from coordinate point A of the initial coordinate to coordinate point B of the absolute coordinate.

The orientation determining submodule 340a2 is configured to determine the orientation based on the reference direction and the relative position.

The second positioning module 340b is configured to, when the number of the environment pictures is 2, determine current orientation and actual coordinate of the user based on the relative position, the absolute coordinate and the initial coordinate.

Optionally, the second positioning module 340b includes a first positioning submodule 340b1; or a second positioning submodule 340b2.

The first positioning submodule 340b1 is configured to obtain straight line AB₁ which passes through the coordinate point A of the initial coordinate and a first coordinate point B₁ in the absolute coordinate; determine the actual coordinate based on a second coordinate point B₂ in the absolute coordinate, the straight line AB₁ and two of the relative positions; and determine the orientation based on the actual coordinate and at least one of the relative positions.

The second positioning submodule 340b2 is configured to obtain straight line AB₁ which passes through the coordinate point A of the initial coordinate and a first coordinate point B₁ in the absolute coordinate and straight line AB₂ which passes through the coordinate point A of the initial coordinate and a second coordinate point B₂ in the absolute coordinate, respectively; determine the orientation based on the straight line AB₁, the straight line AB₂ and two of the relative positions; and determine the actual coordinate based on the orientation and at least one of the relative positions.

The third positioning module 340c is configured to, when the number of the environment pictures is 3 or more, determine current orientation and actual coordinate of the user based on the relative position and the absolute coordinate.

Optionally, the third positioning module 340c includes a straight line obtaining submodule 340c1, an orientation calculating submodule 340c2 and a coordinate calculating submodule 340c3.

The straight line obtaining submodule 340c1 is configured to obtain straight line AB₁ which passes through the coordinate point A of the initial coordinate and a first coordinate point B₁ in the absolute coordinate, straight line AB₂ which passes through the coordinate point A of the initial coordinate and a second coordinate point B₂ in the absolute coordinate, and straight line AB₃ which passes through the coordinate point A of the initial coordinate and a third coordinate point B₃ in the absolute coordinate, respectively.

The orientation calculating submodule 340c2 is configured to determine the orientation based on the straight line AB₁, the straight line AB₂, the straight line AB₃ and three of the relative positions.

The coordinate calculating submodule 340c3 is configured to determine the actual coordinate based on the orientation and at least one of the relative positions.

Optionally, the third positioning module 340c includes a condition detecting submodule 340c4, a lateral linking submodule 340c5, a vertical line obtaining submodule 340c6 and a result determining submodule 340c7.

The condition detecting submodule 340c4 is configured to detect whether three of the relative positions meet a preset condition which is: one of the relative positions is that the object is directly in front of the user, another one of the relative positions is that the object is directly on the left of the user, and still another one of the relative positions is that the object is directly on the right of the user.

The lateral linking submodule 340c5 is configured to, if it is detected that the preset condition is met, obtain straight line B₂B₃ which passes through coordinate point B₂ corresponding to the absolute coordinate of the object with the relative position of directly on the left of the user and coordinate point B₃ corresponding to the absolute coordinate of the object with the relative position of directly on the right of the user.

The vertical line obtaining submodule 340c6 is configured to obtain vertical line B₁S between coordinate point B₁ corresponding to the absolute coordinate of the object with the relative position of directly in front of the user and the straight line B₂B₃.

The result determining submodule 340c7 is configured to determine the coordinate of perpendicular foot S as the actual coordinate, and determine the direction from the perpendicular foot S to the coordinate point B₁ as the orientation.

The destination obtaining module 350 is configured to obtain a destination coordinate of a destination to be reached by the user.

The route determining module 360 is configured to determine at least one route based on the destination coordinate and the geographic position information.

The navigation displaying module 370 is configured to display the geographic position information, the destination coordinate and the route.

To sum up, in the apparatus for positioning and navigating provided by the present embodiment, by obtaining an initial coordinate of a user, obtaining a preset number of environment pictures within a preset geographic range corresponding to the initial coordinate, and obtaining an absolute coordinate corresponding to each environment picture from a preset correspondence relationship between different environment pictures and different absolute coordinates, obtaining a relative position between an object in the environment picture and the user for each environment picture, and determining current geographic position information of the user based on the relative position and the absolute coordinate, the problem in the background art that the weight, volume and production cost of the electronic device are increased due to employing hardware components such as gyro or electronic compass to obtain orientation of the user is solved. In the apparatus for positioning and navigating provided by the present embodiment, the geographic position information including the orientation of the user may be obtained without mounting hardware components such as gyro or electronic compass inside the electronic device, thereby the weight and volume of the electronic device may be reduced, and the production cost may be saved.

Further, as for different numbers of environment pictures, the present embodiment provides a plurality of methods for calculating the orientation and actual coordinate of the user, some algorithms are simple and have a high efficiency for positioning and navigating; some algorithms determine the orientation and actual coordinate of the user by averaging two or three candidate orientations, so as to improve the stability of calculation result; and some algorithms have a high interaction with the user. In actual applications, different calculation methods may be adopted according to different requirements.

As for the apparatus in the above embodiment, the particular manners for performing operations by respective modules have been described in detail in the method embodiments, which will not be described in detail herein.

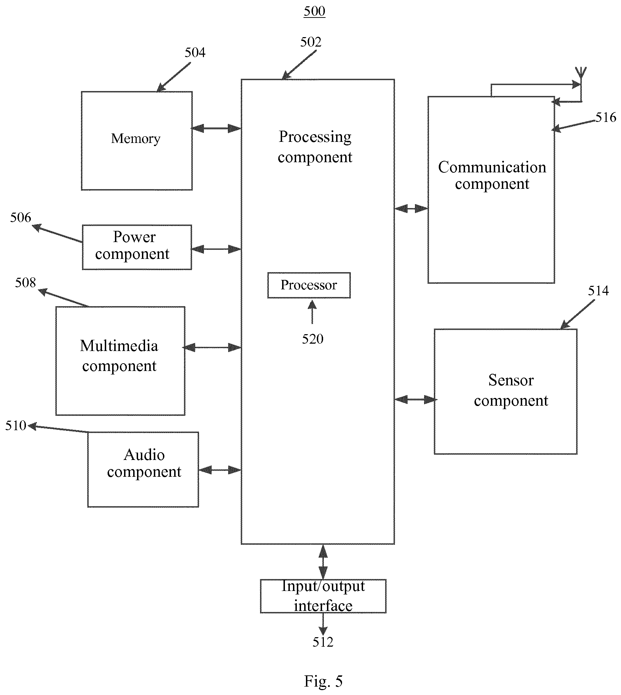

Fig. 5 is a block diagram showing an apparatus for positioning and navigating according to an exemplary embodiment. For example, the apparatus 500 may be a mobile phone, a computer, a digital broadcast terminal, a messaging device, a gaming console, a tablet, a medical device, an exercise equipment, a personal digital assistant, and the like.

Referring to Fig. 5, the apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, telephone calls, data communications, camera operations, and recording operations. The processing component 502 may include one or more processors 520 to execute instructions to perform all or part of the steps in the above-described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the apparatus 500. Examples of such data include instructions for any applications or methods operated on the apparatus 500, contact data, phonebook data, messages, pictures, video, and so on. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power management system, one or more power supplies, one or more power management modes, and other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus, relative positioning of components, e.g., the display and the keypad, of the apparatus 500, a change in position of the apparatus 500 or a component of apparatus 500, a presence or absence of user contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 504, executable by the processor 520 in the apparatus 500, for performing the above-described methods. For example, the non-transitory computer-readable storage medium may be a ROM, a RAM, a CD-ROM, a magnetic tape, a floppy disk, an optical data storage device, and the like.
A non-transitory computer-readable storage medium enables, when the instructions in the storage medium are executed by the processor of the apparatus 500, the apparatus 500 to perform the method for positioning and navigating as shown by Fig. 1 or Fig. 2A.

## Claims

1. A method for positioning and navigating, comprising the step of:
obtaining an initial rough coordinate of a where a user is located (102, 201); and **characterised in** comprising the steps of:
obtaining a preset number of at least two environment pictures within a preset geographic range corresponding to the initial coordinate (202), for obtaining a coordinate in an absolute coordinate system corresponding to an object in each environment picture that is visible to the user from a preset correspondence relationship between different environment pictures and different absolute coordinates (104, 203);
obtaining a relative position between an object in an environment picture and the user for each environment picture (106, 204) by;
displaying the environment picture and guide information, the guide information being configured to guide the user to face the object in the environment picture, and/or guide the user to move the environment picture in a corresponding direction according to the relative position between the object in the environment picture and the user himself, and/or guide the user to move the environment picture to a corresponding position according to the relative actual position between the object in the environment picture and the user himself; and
receiving an input signal triggered by the user according to the guide information; and determining the relative position between the object in the environment picture and the user according to the input signal;
and determining an actual coordinate of the current geographic position of where the user is located based on the relative position and the absolute coordinate (108, 205).

2. The method according to claim 1, comprising;
obtaining a straight line AB₁ which passes through a coordinate point A of the initial rough coordinate and a first coordinate point B₁ in the absolute coordinate; determining the rough coordinate based on a second coordinate point B₂ in the absolute coordinate, the straight line AB₁ and two relative positions obtained for the two environment pictures; and determining the orientation based on the rough coordinate and at least one of the relative positions;
or,
obtaining a straight line AB₁ which passes through the coordinate point A of the initial rough coordinate and a first coordinate point B₁ in the absolute coordinate and a straight line AB₂ which passes through the coordinate point A of the initial rough coordinate and a second coordinate point B₂ in the absolute coordinate, respectively; determining the orientation based on the straight line AB₁, the straight line AB₂ and two relative positions obtained for the two environment pictures; and determining the actual coordinate based on the orientation and at least one of the relative positions.

3. The method according to claim 1, wherein determining the current orientation and the initial rough coordinate of the user based on the relative position and the absolute coordinate when the number of the environment pictures is 3 or more, comprises:
obtaining a straight line AB₁ which passes through a coordinate point A of the initial rough coordinate and a first coordinate point B₁ in the absolute coordinate, a straight line AB₂ which passes through the coordinate point A of the initial rough coordinate and a second coordinate point B₂ in the absolute coordinate, and a straight line AB₃ which passes through the coordinate point A of the initial rough coordinate and a third coordinate point B₃ in the absolute coordinate, respectively;
determining the orientation based on the straight line AB₁, the straight line AB₂, the straight line AB₃ and three relative positions obtained for the three environment pictures; and
determining the actual coordinate based on the orientation and at least one of the relative positions.

4. The method according to claim 1, wherein determining the current orientation and the initial rough coordinate of the user based on the relative position and the absolute coordinate when the number of the environment pictures is 3 or more, comprises:
detecting whether three relative positions obtained for the three environment pictures meet a preset condition, which is: one of the relative positions is that the object in one of the three environment pictures is directly in front of the user, another of the relative positions is that the object in another of the three environment pictures is directly on the left of the user, and the other of the relative positions is that the object in the other of the three environment pictures is directly on the right of the user;
if it is detected that the preset condition is met, obtaining a straight line B₂B₃ which passes through a coordinate point B₂ corresponding to the absolute coordinate of the object with the relative position of directly on the left of the user and a coordinate point B₃ corresponding to the absolute coordinate of the object directly on the right of the user;
obtaining a vertical line B₁S between a coordinate point B₁ corresponding to the absolute coordinate of the object with the relative position of directly in front of the user and the straight line B₂B₃; and
determining the coordinate of a perpendicular foot S as the actual coordinate, and determining a direction from the perpendicular foot S to the coordinate point B₁ as the orientation.

5. The method according to any one of claims 1 to 4, wherein obtaining the preset number of environment pictures within the preset geographic range corresponding to the initial rough coordinate (202) comprises:
obtaining m candidate pictures within the preset geographic range corresponding to the initial rough coordinate; and
selecting environment pictures of the preset number n from the m candidate pictures; where m≥n>0.

6. The method according to claim 5, wherein selecting environment pictures of the preset number n from the m candidate pictures comprises:
ordering the m candidate pictures according to a preset priority so as to obtain a candidate picture sequence, and selecting environment pictures of the preset number n from the candidate picture sequence;
or,
displaying a part or all of the m candidate pictures, receiving a selection signal corresponding to the candidate pictures, and determining environment pictures of the preset number n according to the selection signal.

7. The method according to any one of claims 1 to 6, wherein the method further comprises:
obtaining a destination coordinate of a destination to be reached by the user (206);
determining at least one route based on the destination coordinate and the current geographic position information (207) of where the user is located; and
displaying the geographic position information, the destination coordinate and the route (208).

8. An apparatus for positioning and navigating, comprising
an initial obtaining module (310) configured to obtain an initial rough coordinate of where a user is located a user (102, 201);
**characterised in that** the apparatus also comprises:
a picture obtaining module (320) configured to obtain a preset number of at least two environment pictures within a preset geographic range corresponding to the initial coordinate (202), for obtaining a coordinate in an absolute coordinate system corresponding to an object in each environment picture that is visible to the user from a preset correspondence relationship between different environment pictures and different absolute coordinates (104, 203);
a position obtaining module (330) configured to obtain a relative position between an object in an environment picture and the user for each environment picture (106, 204) by;
displaying the environment picture and guide information, the guide information being configured to guide the user to face the object in the environment picture, and/or guide the user to move the environment picture in a corresponding direction according to the relative position between the object in the environment picture and the user himself, and/or guide the user to move the environment picture to a corresponding position according to the relative actual position between the object in the environment picture and the user himself; and
receiving an input signal triggered by the user according to the guide information; and determining the relative position between the object in the environment picture and the user according to the input signal;
and
a map positioning module (340) configured to determine an actual coordinate of the current geographic position of where the user is located based on the relative position and the absolute coordinate (108, 205).

9. An apparatus for positioning and navigating, wherein the apparatus comprises:
a processor (520); and
a memory (504) for storing instructions executable by the processor (520);
wherein the processor (520) is configured to perform the method according to any one of claims 1 to 7.

10. A computer program, which when executing on a processor (520) of an apparatus for positioning and navigating, performs a method according to any one of claims 1 to 7.

## Patentansprüche

1. Verfahren zum Positionieren und Navigieren, das den folgenden Schritt beinhaltet:
Erhalten einer anfänglichen groben Koordinate eines Ortes, an dem sich ein Benutzer befindet (102, 201);
und **dadurch gekennzeichnet, dass** es die folgenden Schritte beinhaltet:
Erhalten einer voreingestellten Anzahl von wenigstens zwei Umgebungsbildern innerhalb eines voreingestellten geographischen Bereichs entsprechend der anfänglichen Koordinate (202), zum Erhalten einer Koordinate in einem absoluten Koordinatensystem entsprechend einem Objekt in jedem Umgebungsbild, das für den Benutzer sichtbar ist, aus einer voreingestellten Korrespondenzbeziehung zwischen unterschiedlichen Umgebungsbildern und unterschiedlichen absoluten Koordinaten (104, 203);
Erhalten einer relativen Position zwischen einem Objekt in einem Umgebungsbild und dem Benutzer für jedes Umgebungsbild (106, 204) durch:
Anzeigen des Umgebungsbildes und von Leitinformationen, wobei die Leitinformationen zum Leiten des Benutzers konfiguriert sind, um dem Objekt in dem Umgebungsbild gegenüberzutreten, und/oder Leiten des Benutzers zum Bewegen des Bewegungsbildes in einer entsprechenden Richtung gemäß der relativen Position zwischen dem Objekt in dem Umgebungsbild und dem Benutzer selbst, und/oder Leiten des Benutzers zum Bewegen des Umgebungsbildes zu einer entsprechenden Position gemäß der relativen tatsächlichen Position zwischen dem Objekt in dem Umgebungsbild und dem Benutzer selbst; und
Empfangen eines von dem Benutzer gemäß den Leitinformationen ausgelösten Eingangssignals; und Bestimmen der relativen Position zwischen dem Objekt in dem Umgebungsbild und dem Benutzer gemäß dem Eingangssignal;
und Bestimmen einer tatsächlichen Koordinate der aktuellen geographischen Position des Ortes, an dem sich der Benutzer befindet, auf der Basis der relativen Position und der absoluten Koordinate (108, 205).

2. Verfahren nach Anspruch 1, das Folgendes beinhaltet:
Erhalten einer Geraden AB₁, die durch einen Koordinatenpunkt A der anfänglichen groben Koordinate und einen ersten Koordinatenpunkt B₁ in der absoluten Koordinate verläuft; Bestimmen der groben Koordinate auf der Basis eines zweiten Koordinatenpunkts B₂ in der absoluten Koordinate, der Geraden AB₁ und zwei relativer Positionen, die für die beiden Umgebungsbilder erhalten wurden; und Bestimmen der Orientierung auf der Basis der groben Koordinate und wenigstens einer der relativen Positionen;
oder
Erhalten einer Geraden AB₁, die durch den Koordinatenpunkt A der anfänglichen groben Koordinate und einen ersten Koordinatenpunkt B₁ in der absoluten Koordinate verläuft, und einer Geraden AB₂, die durch den Koordinatenpunkt A der anfänglichen groben Koordinate und einen zweiten Koordinatenpunkt B₂ in der absoluten Koordinate verläuft; Bestimmen der Orientierung auf der Basis der Geraden AB₁, der Geraden AB₂ und von zwei relativen Positionen, die für die beiden Umgebungsbilder der erhalten wurden; und Bestimmen der tatsächlichen Koordinate auf der Basis der Orientierung und wenigstens einer der relativen Positionen.

3. Verfahren nach Anspruch 1, wobei das Bestimmen der aktuellen Orientierung und der anfänglichen groben Koordinate des Benutzers auf der Basis der relativen Position und der absoluten Koordinate, wenn die Anzahl der Umgebungsbilder drei oder mehr ist, Folgendes beinhaltet:
Erhalten einer Geraden AB₁, die durch einen Koordinatenpunkt A der anfänglichen groben Koordinate und einen ersten Koordinatenpunkt B₁ in der absoluten Koordinate verläuft, einer Geraden AB₂, die durch den Koordinatenpunkt A der anfänglichen groben Koordinate und einen zweiten Koordinatenpunkt B₂ in der absoluten Koordinate verläuft, und einer geraden AB₃, die durch den Koordinatenpunkt A der anfänglichen groben Koordinate und einen dritten Koordinatenpunkt B₃ in der absoluten Koordinate verläuft;
Bestimmen der Orientierung auf der Basis der Geraden AB₁, der Geraden AB₂, der Geraden AB₃ und von drei relativen Positionen, die für die drei Umgebungsbilder erhalten wurden; und
Bestimmen der tatsächlichen Koordinate auf der Basis der Orientierung und wenigstens einer der relativen Positionen.

4. Verfahren nach Anspruch 1, wobei das Bestimmen der aktuellen Orientierung und der anfänglichen groben Koordinate des Benutzers auf der Basis der relativen Position und der absoluten Koordinate, wenn die Anzahl der Umgebungsbilder drei oder mehr ist, Folgendes beinhaltet:
Erkennen, ob für die drei Umgebungsbilder erhaltene drei relative Positionen eine voreingestellte Bedingung erfüllen, die wie folgt lautet: eine der relativen Positionen ist die, dass sich das Objekt in einem der drei Umgebungsbilder direkt vor dem Benutzer befindet, eine andere der relativen Positionen ist die, dass sich das Objekt in einem anderen der drei Umgebungsbilder direkt links von dem Benutzer befindet, und die andere der relativen Positionen ist die, dass sich das Objekt in dem anderen der drei Umgebungsbilder direkt rechts von dem Benutzer befindet;
wenn erkannt wird, dass die voreingestellte Bedingung erfüllt ist, Erhalten einer Geraden B₂B₃, die durch einen Koordinatenpunkt B₂ entsprechend der absoluten Koordinate des Objekts mit der relativen Position direkt links von dem Benutzer und einen Koordinatenpunkt B₃ entsprechend der absoluten Koordinate des Objekts direkt rechts von dem Benutzers verläuft;
Erhalten einer Vertikalen B₁S zwischen einem Koordinatenpunkt B₁ entsprechend der absoluten Koordinate des Objekts mit der relativen Position direkt vor dem Benutzer und der Geraden B₂B₃; und
Bestimmen der Koordinate eines lotrechten Fußes S als die tatsächliche Koordinate, und Bestimmen einer Richtung von dem lotrechten Fuß S zum Koordinatenpunkt B₁ als die Orientierung.

5. Verfahren nach einem der Ansprüche 1 bis 4, wobei das Erhalten der voreingestellten Anzahl von Umgebungsbildern in dem voreingestellten geographischen Bereich entsprechend der anfänglichen groben Koordinate (202) Folgendes beinhaltet:
Erhalten von m Kandidatenbildern in dem voreingestellten geographischen Bereich entsprechend der anfänglichen groben Koordinate; und
Auswählen von Umgebungsbildern der voreingestellten Anzahl n aus den m Kandidatenbildern; wobei m≥n>0 ist.

6. Verfahren nach Anspruch 5, wobei das Auswählen von Umgebungsbildern der voreingestellten Anzahl n aus den m Kandidatenbildern Folgendes beinhaltet:
Ordnen der m Kandidatenbilder gemäß einer voreingestellten Priorität, um eine Kandidatenbildsequenz zu erhalten, und Auswählen von Umgebungsbildern der voreingestellten Anzahl n aus der Kandidatenbildsequenz;
oder
Anzeigen einiger oder aller der m Kandidatenbilder, Empfangen eines Auswahlsignals entsprechend den Kandidatenbildern und Bestimmen von Umgebungsbildern der voreingestellten Anzahl n gemäß dem Auswahlsignal.

7. Verfahren nach einem der Ansprüche 1 bis 6, wobei das Verfahren ferner Folgendes beinhaltet:
Erhalten einer Zielkoordinate eines Ziels, das von dem Benutzer (206) zu erreichen ist;
Bestimmen wenigstens einer Route auf der Basis der Zielkoordinate und der aktuellen geographischen Positionsinformationen (207) des Ortes, an dem sich der Benutzer befindet; und
Anzeigen der geographischen Positionsinformation, der Zielkoordinate und der Route (208).

8. Vorrichtung zum Positionieren und Navigieren, die Folgendes umfasst:
ein anfängliches Erhaltemodul (310), konfiguriert zum Erhalten einer anfänglichen groben Koordinate des Ortes, an dem sich ein Benutzer befindet (102, 201);
**dadurch gekennzeichnet, dass** die Vorrichtung auch Folgendes umfasst:
ein Bilderhaltemodul (320), konfiguriert zum Erhalten einer voreingestellten Anzahl von wenigstens zwei Umgebungsbildern in einem voreingestellten geographischen Bereich entsprechend der Anfangskoordinate (202), zum Erhalten einer Koordinate in einem absoluten Koordinatensystem entsprechend einem Objekt in jedem Umgebungsbild, das für den Benutzer sichtbar ist, aus einer voreingestellten Korrespondenzbeziehung zwischen unterschiedlichen Umgebungsbildern und unterschiedlichen absoluten Koordinaten (104, 203);
ein Positionserhaltemodul (330), konfiguriert zum Erhalten einer relativen Position zwischen einem Objekt in einem Umgebungsbild und dem Benutzer für jedes Umgebungsbild (106, 204) durch:
Anzeigen des Umgebungsbildes und von Leitinformationen, wobei die Leitinformationen zum Leiten des Benutzers konfiguriert sind, so dass er dem Objekt in dem Umgebungsbild gegenübertritt, und/oder Leiten des Benutzers zum Bewegen des Umgebungsbildes in einer entsprechenden Richtung gemäß der relativen Position zwischen dem Objekt in dem Umgebungsbild und dem Benutzer selbst, und/oder Leiten des Benutzers zum Bewegen des Umgebungsbildes zu einer entsprechenden Position gemäß der relativen tatsächlichen Position zwischen dem Objekt in dem Umgebungsbild und dem Benutzer selbst; und
Empfangen eines vom Benutzer gemäß den Leitinformationen ausgelösten Eingangssignals; und Bestimmen der relativen Position zwischen dem Objekt in dem Umgebungsbild und dem Benutzer gemäß dem Eingangssignal;
und
ein Kartenpositionierungsmodul (340), konfiguriert zum Bestimmen einer tatsächlichen Koordinate der aktuellen geographischen Position des Ortes, an dem sich der Benutzer befindet, auf der Basis der relativen Position und der absoluten Koordinate (108,205).

9. Vorrichtung zum Positionieren und Navigieren, wobei die Vorrichtung Folgendes umfasst:
einen Prozessor (520); und
einen Speicher (504) zum Speichern von von dem Prozessor (520) ausführbaren Befehlen;
wobei der Prozessor (520) zum Ausführen des Verfahrens nach einem der Ansprüche 1 bis 7 konfiguriert ist.

10. Computerprogramm, das bei Ausführung auf einem Prozessor (520) einer Vorrichtung zum Positionieren und Navigieren ein Verfahren nach einem der Ansprüche 1 bis 7 ausführt.

## Revendications

1. Un procédé de positionnement et de navigation, comprenant l'opération suivante :
l'obtention d'une coordonnée grossière initiale d'un point où se situe un utilisateur (102, 201),
et **caractérisé en ce qu'**il comprend les opérations suivantes :
l'obtention d'un nombre prédéfini d'au moins deux images de l'environnement à l'intérieur d'une zone géographique prédéfinie correspondant à la coordonnée initiale (202) destinées à l'obtention d'une coordonnée dans un système de coordonnées absolues correspondant à un objet dans chaque image de l'environnement qui est visible à l'utilisateur à partir d'une relation de correspondance prédéfinie entre différentes images de l'environnement et différentes coordonnées absolues (104, 203),
l'obtention d'une position relative entre un objet dans une image de l'environnement et l'utilisateur pour chaque image de l'environnement (106, 204) par :
l'affichage de l'image de l'environnement et d'informations de guidage, les informations de guidage étant configurées de façon à guider l'utilisateur de façon à faire face à l'objet dans l'image de l'environnement et/ou guider l'utilisateur de façon à déplacer l'image de l'environnement dans une direction correspondante en fonction de la position relative entre l'objet dans l'image de l'environnement et l'utilisateur lui-même, et/ou guider l'utilisateur de façon à déplacer l'image de l'environnement vers une position correspondante en fonction de la position réelle relative entre l'objet dans l'image de l'environnement et l'utilisateur lui-même, et
la réception d'un signal en entrée déclenché par l'utilisateur en fonction des informations de guidage, et la détermination de la position relative entre l'objet dans l'image de l'environnement et l'utilisateur en fonction du signal en entrée,
et la détermination d'une coordonnée réelle de la position géographique actuelle du point où se situe l'utilisateur en fonction de la position relative et de la coordonnée absolue (108, 205).

2. Le procédé selon la Revendication 1, comprenant :
l'obtention d'une ligne droite AB₁ qui passe par un point de coordonnée A de la coordonnée grossière initiale et un premier point de coordonnée B₁ dans la coordonnée absolue, la détermination de la coordonnée grossière en fonction d'un deuxième point de coordonnée B₂ dans la coordonnée absolue, de la ligne droite AB₁ et de deux positions relatives obtenues pour les deux images de l'environnement, et la détermination de l'orientation en fonction de la coordonnée grossière et d'au moins une des positions relatives,
ou
l'obtention d'une ligne droite AB₁ qui passe par le point de coordonnée A de la coordonnée grossière initiale et un premier point de coordonnée B₁ dans la coordonnée absolue et une ligne droite AB₂ qui passe par le point de coordonnée A de la coordonnée grossière initiale et un deuxième point de coordonnée B₂ dans la coordonnée absolue, respectivement, la détermination de l'orientation en fonction de la ligne droite AB₁, de la ligne droite AB₂ et de deux positions relatives obtenues pour les deux images de l'environnement, et la détermination de la coordonnée réelle en fonction de l'orientation et d'au moins une des positions relatives.

3. Le procédé selon la Revendication 1, où la détermination de l'orientation actuelle et de la coordonnée grossière initiale de l'utilisateur en fonction de la position relative et de la coordonnée absolue lorsque le nombre des images de l'environnement est trois ou plus comprend :
l'obtention d'une ligne droite AB₁ qui passe par un point de coordonnée A de la coordonnée grossière initiale et un premier point de coordonnée B₁ dans la coordonnée absolue, une ligne droite AB₂ qui passe par le point de coordonnée A de la coordonnée grossière initiale et un deuxième point de coordonnée B₂ dans la coordonnée absolue, et une ligne droite AB₃ qui passe par le point de coordonnée A de la coordonnée grossière initiale et un troisième point de coordonnée B₃ dans la coordonnée absolue, respectivement,
la détermination de l'orientation en fonction de la ligne droite AB₁, de la ligne droite AB₂, de la ligne droite AB₃ et de trois positions relatives obtenues pour les trois images de l'environnement, et
la détermination de la coordonnée réelle en fonction de l'orientation et d'au moins une des positions relatives.

4. Le procédé selon la Revendication 1, où la détermination de l'orientation actuelle et de la coordonnée grossière initiale de l'utilisateur en fonction de la position relative et de la coordonnée absolue lorsque le nombre des images de l'environnement est de trois ou plus comprend :
la détection si trois positions relatives obtenues pour les trois images de l'environnement satisfont une condition prédéfinie, qui est : une des positions relatives est que l'objet dans une des trois images de l'environnement est directement devant l'utilisateur, une autre des positions relatives est que l'objet dans une autre des trois images de l'environnement est directement sur la gauche de l'utilisateur, et l'autre des positions relatives est que l'objet dans l'autre des trois images de l'environnement est directement sur la droite de l'utilisateur,
s'il est détecté que la condition prédéfinie est satisfaite, l'obtention d'une ligne droite B₂B₃ qui passe par un point de coordonnée B₂ correspondant à la coordonnée absolue de l'objet, avec la position relative directement sur la gauche de l'utilisateur et un point de coordonnée B₃ correspondant à la coordonnée absolue de l'objet directement sur la droite de l'utilisateur,
l'obtention d'une ligne verticale B₁S entre un point de coordonnée B₁ correspondant à la coordonnée absolue de l'objet avec la position relative directement devant l'utilisateur et la ligne droite B₂B₃, et
la détermination de la coordonnée d'un pied perpendiculaire S en tant que coordonnée réelle, et la détermination d'une direction à partir du pied perpendiculaire S vers le point de coordonnée B₁ en tant qu'orientation.

5. Le procédé selon l'une quelconque des Revendications 1 à 4, où l'obtention du nombre prédéfini d'images de l'environnement à l'intérieur de la zone géographique prédéfinie correspondant à la coordonnée grossière initiale (202) comprend :
l'obtention de m images candidates à l'intérieur de la zone géographique prédéfinie correspondant à la coordonnée grossière initiale, et
la sélection d'images de l'environnement du nombre prédéfini n à partir des m images candidates, où m ≥ n > 0.

6. Le procédé selon la Revendication 5, où la sélection d'images de l'environnement du nombre prédéfini n à partir des m images candidates comprend :
l'ordonnancement des m images candidates en fonction d'une priorité prédéfinie de façon à obtenir une séquence d'images candidates, et la sélection d'images de l'environnement du nombre prédéfini n à partir de la séquence d'images candidates,
ou
l'affichage d'une partie ou de la totalité de des m images candidates, la réception d'un signal de sélection correspondant aux images candidates, et la détermination d'images de l'environnement du nombre prédéfini n en fonction du signal de sélection.

7. Le procédé selon l'une quelconque des Revendications 1 à 6, où le procédé comprend en outre :
l'obtention d'une coordonnée de destination d'une destination à atteindre par l'utilisateur (206),
la détermination d'au moins un itinéraire en fonction de la coordonnée de destination et des informations de position géographique actuelle (207) du point où se situe l'utilisateur, et
l'affichage des informations de position géographique, de la coordonnée de destination et de l'itinéraire (208).

8. Un appareil de positionnement et de navigation, comprenant
un module d'obtention initiale (310) configuré de façon à obtenir une coordonnée grossière initiale du point où se situe un utilisateur (102, 201),
**caractérisé en ce que** l'appareil comprend également :
un module d'obtention d'images (320) configuré de façon à obtenir un nombre prédéfini d'au moins deux images de l'environnement à l'intérieur d'une zone géographique prédéfinie correspondant à la coordonnée initiale (202) destinées à l'obtention d'une coordonnée dans un système de coordonnées absolues correspondant à un objet dans chaque image de l'environnement qui est visible à l'utilisateur à partir d'une relation de correspondance prédéfinie entre différentes images de l'environnement et différentes coordonnées absolues (104, 203),
un module d'obtention de position (330) configuré de façon à obtenir une position relative entre un objet dans une image de l'environnement et l'utilisateur pour chaque image de l'environnement (106, 204) par :
l'affichage de l'image de l'environnement et d'informations de guidage, les informations de guidage étant configurées de façon à guider l'utilisateur de façon à faire face à l'objet dans l'image de l'environnement et/ou guider l'utilisateur de façon à déplacer l'image de l'environnement dans une direction correspondante en fonction de la position relative entre l'objet dans l'image de l'environnement et l'utilisateur lui-même, et/ou guider l'utilisateur de façon à déplacer l'image de l'environnement vers une position correspondante en fonction de la position réelle relative entre l'objet dans l'image de l'environnement et l'utilisateur lui-même, et
la réception d'un signal en entrée déclenché par l'utilisateur en fonction des informations de guidage, et la détermination de la position relative entre l'objet dans l'image de l'environnement et l'utilisateur en fonction du signal en entrée,
et
un module de positionnement cartographique (340) configuré de façon à déterminer une coordonnée réelle de la position géographique actuelle du point où se situe l'utilisateur en fonction de la position relative et de la coordonnée absolue (108, 205).

9. Un appareil de positionnement et de navigation, où l'appareil comprend :
un processeur (520), et
une mémoire (504) destinée à la conservation en mémoire d'instructions exécutables par le processeur (520),
où le processeur (520) est configuré de façon à exécuter le procédé selon l'une quelconque des Revendications 1 à 7.

10. Un programme informatique, qui, lorsqu'il est exécuté sur un processeur (520) d'un appareil de positionnement et de navigation, exécute un procédé selon l'une quelconque des Revendications 1 à 7.
